# EUROPÄISCHE PATENTSCHRIFT

(11) **EP 3 464 888 B1**
(45) Veröffentlichungstag und Bekanntmachung des Hinweises auf die Patenterteilung: **09.02.2022**
(21) Anmeldenummer: 17726637.6
(22) Anmeldetag: 31.05.2017
(51) Int. Cl.: F03D 7/02, F16C 17/10, F03D 80/70, F16C 33/20

(54) **WINDENERGIEANLAGEN-ROTORBLATT UND WINDENERGIEANLAGE MIT SELBIGEM**
WIND TURBINE ROTARY CONNECTION, ROTOR BLADE, AND WIND TURBINE COMPRISING SAID ROTOR BLADE
COURONNE D'ORIENTATION POUR ÉOLIENNES, PALE DE ROTOR ET ÉOLIENNE AINSI ÉQUIPÉE

(30) Priorität: 07.06.2016 DE 102016210039
(43) Veröffentlichungstag der Anmeldung: 10.04.2019
(73) Patentinhaber: Wobben Properties GmbH, 26607 Aurich (DE)
(72) Erfinder: MTAUWEG, Samer, 27568 Bremerhaven (DE)
(74) Vertreter: Eisenführ Speiser
(86) Internationale Anmeldenummer: PCT/EP2017/063114
(87) Internationale Veröffentlichungsnummer: WO 2017/211638

(56) Entgegenhaltungen:
- EP-A1- 2 511 521
- WO-A1-2016/055391
- DE-A1- 10 255 745
- DE-A1-102013 004 339
- DE-U1-202007 002 609

## Beschreibung

Die vorliegende Erfindung betrifft ein Windenergieanlagen-Rotorblatt und eine Windenergieanlage.

Windenergieanlagen sind allgemein bekannt. Sie weisen an verschiedenen Funktionsstellen Drehverbindungen auf, um beispielsweise am Azimutlager die Gondel relativ zum Turm der Windenergieanlage verschwenken zu können, oder um den Anstellwinkel des Rotorblatts zum Wind relativ zur Rotornabe mit einem Pitchantrieb feststellen zu können. Die jeweiligen Komponenten der Windenergieanlage sind zu diesem Zweck mit Drehverbindungen aneinander drehbar gelagert. Aufgrund der hohen Lasten hat man im Stand der Technik üblicherweise auf Wälzlagerungen zurückgegriffen, die jeweils als einreihige oder mehrreihige Lagerung oder als Kombination aus axialen und radialen Lagern, aus Kegellagern oder Momentenlagern bestanden. Ungeachtet der allgemein zufriedenstellenden mechanischen Leistung dieser Lagerarten erfordern Wälzlager eine gewisse Baugröße und haben durchweg vergleichsweise hohe Gewichte, sodass an den bekannten Windenergieanlagen, ihren Drehverbindungen und den die Drehverbindungen aufweisenden Komponenten wie beispielsweise den Gondeln oder Rotorblättern der Windenergieanlagen, Verbesserungsbedarf hinsichtlich der Baugröße und des Gewichts bestand. Ein Beispiel aus dem Stand der Technik ist aus EP2511521A1 bekannt.

Eine Drehverbindung wird erfindungsgemäß verstanden als jegliche drehbewegliche Lagerung zweier Teile zueinander, umfassend aber nicht ausschließlich bestehend aus Stützlager, Fest-Loslager, Momentenlager etc.. Vor diesem Hintergrund lag der Erfindung die Aufgabe zugrunde, eine Windenergieanlagen-Drehverbindung der eingangs bezeichneten Art hinsichtlich der vorstehend bezeichneten Probleme möglichst weitgehend zu verbessern. Insbesondere lag der Erfindung die Aufgabe zu Grunde, die eingangs bezeichnete Windenergieanlagen-Drehverbindung hinsichtlich ihres Gewichts und Bauraums zu verbessern, und hierbei die Belastbarkeit möglichst wenig zu beeinträchtigen.

Die Erfindung löst die ihr zugrunde liegende Aufgabe, indem sie ein Windenergieanlagen-Rotorblatt nach Anspruch 1 vorschlägt. Die Windenergieanlagen-Drehverbindung, die insbesondere eine Blattlager- oder Azimut-Drehverbindung ist, ist als Gleitlagerung ausgebildet, mit einem Innenring mit einer Anzahl erster Gleitflächen, einem Außenring mit einer Anzahl zweiter Gleitflächen, die jeweils einer der ersten Gleitflächen als Gleichpartner zugeordnet sind, wobei die Gleitlagerung als eine trockenlaufende Gleitlagerung ausgebildet ist. Die Erfindung folgt dem Ansatz, dass eine Gleitlagerung ein deutlich geringeren Bauraum und eine deutlich gewichtssparendere Bauweise erlaubt, als konventionelle Welslagerung. Es hat sich überraschenderweise herausgestellt, dass trockenlaufende Gleitlagerungen als Windenergieanlagen-Drehverbindung gut geeignet sind, insbesondere als Blattlager- oder Azimut-Drehverbindung.

Die Erfindung wird dadurch vorteilhaft weitergebildet, dass bei einem der Ringe, vorzugsweise dem Innenring, eine, oder mehrere sämtliche der Gleitflächen als metallische Gleitflächen ausgebildet sind. Die metallische Oberfläche weist hierzu vorzugsweise eine Rauigkeit Rₐ von weniger als 1,0 µm auf, vorzugsweise 0,8 µm oder weniger.

Als metallischer Werkstoff wird vorzugsweise jeweils Messing, eine Messinglegierung, Weißmetall, etwa Blei, Zinn, Antimon, Wismut, Kupfer, eine Kupferlegierung, insbesondere eine Kupfer-Blei-Gusslegierung, eine Bronze-Gusslegierung, insbesondere Bleibronze, eine Bleibronze-Gusslegierung, eine Blei-Zinn-Gusslegierung, Aluminium, eine Aluminiumlegierung, insbesondere eine Aluminium-Zinn-Gusslegierung, eine Aluminium-Zink-Gusslegierung, Stahl, eine Stahllegierung, ein Sintermetall, oder eine Kombination aus mehreren davor genannten metallischen Werkstoffen verwendet.

Alternativ zu einem rein metallischen Werkstoff wird vorzugsweise ein Metall-Verbundwerkstoff verwendet, etwa ein keramisch-metallischer Verbundwerkstoff (Cermet), oder ein Metall-Kunststoffverbundmaterial.

Alternativ wird vorzugsweise für die Gleitflächen ein, insbesondere nichtmetallischer, Werkstoff wie beispielsweise Sinterkeramik (die als Bestandteil bspw. Metalloxide aufweisen können), ein Hochleistungskunststoff wie etwa ein thermoplastisches Hochleistungspolymer, insbesondere ein amorphes thermoplastisches Hochleistungspolymer, zum Beispiel Polyamidimid (PAI), gegebenenfalls mit Graphit- und/oder PTFE-Zusatz, verwendet. Weiter vorzugsweise ist bzw. sind bei dem jeweils anderen Ring, vorzugsweise dem Außenring, eine, mehrere oder sämtliche der Anzahl von Gleitflächen aus einem Faserverbundwerkstoff teilweise oder vollständig ausgebildet. Die Gleitfläche aus oder mit Faserverbundwerkstoff hat eine überraschend gute Trockenlauffähigkeit und ist daher überraschend verschleißbeständig. Zudem wird eine hohe Schlag- und Stoßverträglichkeit erreicht, zusammen mit einer geringen Empfindlichkeit gegenüber Kantenbelastungen. Aufgrund der guten Trockenlaufeigenschaften kann auf die Verwendung von Schmiermedium, wie beispielsweise Fett oder Öl, verzichtet werden. Die Gleitlagerung ist aufgrund der Verwendung des Faserverbundwerkstoffes sehr beständig gegenüber korrosiven Medien und weist gegenüber rein metallischen Drehverbindungen verbesserte Schwingungsdämpfungswerte auf. Gerade die Reduktion von Schwingungen ist ein immer wichtiger werdender Aspekt in der Konstruktion von Windenergieanlagen, da weltweit immer strengere Schallemissionsrichtlinien Bedeutung erlangen.

Die Gleitflächen, insbesondere die Gleitflächen desjenigen Rings, dessen Gleitflächen teilweise oder vollständig aus einem Faserverbundwerkstoff ausgebildet sind, sind vorzugsweise segmentiert ausgeführt, sodass eine einfachere und schnellere Wartung der Drehverbindung in der Gondel erfolgen kann.

In einer bevorzugten Weiterbildung der erfindungsgemäßen Drehverbindung ist auf einer, mehreren oder sämtlichen Gleitflächen eine Anzahl von Gleitschichten aus jeweils einem der folgenden Materialien aufgetragen: Polytetrafluorethylen, expandiertes Polytetrafluorethylen, Molybdaendisulfid, Graphit, Graphen, oder einer Kombination aus mehreren dieser Materialien. Werden nichtmetallische Werkstoffe für die Gleitflächen verwendet, ist vorzugsweise eine Anzahl der gleitschichten aus einem aufgedampften metallischen Werkstoff ausgebildet.

Sofern im Rahmen der Erfindung von einer "Anzahl" gesprochen wird, so wird hierunter die Zahl 1 und ein ganzzeiliges Vielfaches davon verstanden. Als Fasermaterial für den Faserverbundwerkstoff wird in bevorzugten Ausführungsformen ein Material, ausgewählt aus der Liste bestehend aus: Kohlenstofffasern, Glasfasern, Stahlfasern, Bambusfasern, oder eine Kombination aus mehreren dieser Werkstoffe verwendet.

Vorzugsweise liegt der Faserverbundwerkstoff in verwobener Form vor und ist in ein Matrixmaterial eingebettet, wobei das Matrixmaterial insbesondere ein Thermoplast Duroplast, insbesondere Epoxidharz ist.

Der Innenring und der Außenring weisen gemäß der Erfindung eine radiale Lagerfläche und zwei axiale Lagerflächen auf. Die radialen Lagerflächen des Außen- und Innenrings sind zum Ausbilden eines Radiallagers aufeinander ausgerichtet, während die jeweils eine axiale Lagerfläche des Innenrings auf eine korrespondierende axiale Fläche des Außenrings zum Bilden eines Axiallagers ausgerichtet ist.

In einer weiteren besonders bevorzugten Ausführungsform ist der den Grundbelag aus Faserverbundwerkstoff aufweisende Ring, vorzugsweise der Außenring, zwei- oder mehrteilig ausgebildet, indem an einem ersten Teilkörper die radiale Gleitfläche und eine erste axiale Gleitfläche ausgebildet ist, und an einem zweiten Teilkörper bzw. einem oder mehreren weiteren Teilkörpern die zweite axiale bzw. eine oder mehrere weitere Gleitfläche(n) ausgebildet ist bzw. sind. Vorzugsweise ist dann der zweite Teilkörper bzw. der oder die weiteren Teilkörper als ein- oder mehrteilige Flanschscheibe ausgebildet, wobei der erste und zweite Teilkörper bzw. der oder die weiteren Teilkörper an zueinander korrespondierenden Stirnseiten miteinander koppelbar sind, vorzugsweise reversibel lösbar. Als reversibel lösbare Verbindungen haben sich beispielsweise Schraubverbindungen in der Praxis bewährt. Zum Verschrauben weist vorzugsweise einer der Teilkörper, etwa der erste Teilkörper, metallische Einsätze zum Aufnehmen von Schraubgewinden auf, damit der Faserverbundwerkstoff durch die scharfkantigen Schraubengänge nicht verletzt wird.

In einer bevorzugten Ausführungsform der Erfindung weisen der Innenring und der Außenring jeweils eine oder mehrere miteinander korrespondierende angestellte Lagerflächen auf, vorzugsweise in entgegengesetzte Richtungen angestellte Lagerflächen.

Erfindungsgemäß wird ein Windenergieanlagen-Rotorblatt vorgeschlagen, welches mittels einer Drehverbindung mit einer Nabe der Windenergieanlage verbindbar ist, wobei die Drehverbindung nach einer der vorstehend beschriebenen bevorzugten Ausführungsform ausgebildet ist. Hinsichtlich der technischen Wirkung und Vorteile wird diesbezüglich auf die obigen Ausführungen verwiesen.

Der Außenring der Drehverbindung weist eine, mehrere oder sämtliche der Anzahl von Gleitflächen aus Faserverbundwerkstoff auf, und ist mindestens zweiteilig ausgebildet, indem an einem ersten Teilkörper die radiale Gleitfläche und eine erste Gleitfläche ausgebildet sind, und an einem zweiten Teilkörper die zweite axiale Gleitfläche ausgebildet ist, wobei der erste Teilkörper integral an dem Rotorblatt ausgebildet ist. Dies wird vorzugsweise erreicht, indem der erste Teilkörper und mit ihm die erste axiale Gleitfläche und eine radiale Gleitfläche an dem Rotorblatt bei dessen Herstellung ausbildet werden. Insbesondere, wenn das Rotorblatt ebenfalls aus Faserverbundwerkstoff besteht, werden die entsprechenden Gelegematten für den ersten Teilkörper des Außenrings vorzugsweise mit ausgelegt, und gemeinsam mit den Gelegematten des Rotorblatts in Matrixmaterial eingebettet, sodass ein "monolithisch" wirkendes Gesamtgebilde entsteht, an dem die Gleitflächen des ersten Teilkörper des Außenrings ausgebildet sind.

In bevorzugten Ausführungsformen der Erfindung ist die Drehverbindung eine Azimutlagerung. Vorzugsweise ist die Azimutlagerung in einer segmentierten Form ausgeführt, wobei die einzelnen Gleitflächen in Form eigener Segmente ausgebildet sind. Besonders bevorzugt sind die Segmente aus einem beschichteten Faserverbundwerkstoff, etwa glasfaserverstärktem Kunststoff, ausgebildet. Die Segmente sind vorzugsweise auf einem metallischen Ring montiert, und ein Gegenpart hierzu ist als metallischer Lagerring ausgebildet oder als Lagerfläche an einem metallischen Turmkopfflansch ausgebildet, so dass die Segmente auf dem Lagerring gleiten, beispielsweise während der Windrichtungsnachführung. Alternativ sind vorzugsweise die Segmente auf einem metallischen Ring oder direkt auf dem Turmkopfflansch montiert, und der metallische Lagerring ist an dem Maschinenträger montiert und gleitet auf den Segmenten.

Die Erfindung betrifft ferner eine Windenergieanlage, wie eingangs bezeichnet. Die Erfindung löst die ihr zugrunde liegenden Aufgabe bei einer solchen Windenergieanlage, indem sie eine Windenergieanlage vorschlägt, die einen Turm aufweist, auf dem eine Gondel mittels einer ersten Drehverbindung gelagert ist, wobei an der Gondel eine Rotornabe vorgesehen ist mit einem oder mehreren Rotorblättern, die zum Antrieb eines Generators an einer Rotornabe befestigt sind, wobei die Rotorblätter, insbesondere mittels eines Pitchantriebs, in ihrem Anstellwinkel verstellbar sind und mittels einer Drehverbindung an der Rotornabe gelagert sind. Insbesondere wird vorgeschlagen, die Drehverbindung nach einer der vorstehend beschriebenen bevorzugten Ausführungsformen auszubilden. Besonders bevorzugt sind bei einer solchen Windenergieanlage das oder die Rotorblätter nach einer der vorstehend beschriebenen bevorzugten Ausführungsformen ausgebildet.

Die Erfindung wird nachfolgend unter Bezugnahme auf die beigefügten Figuren näher beschrieben. Hierbei zeigen:
- Fig. 1: eine schematische räumliche Darstellung einer Windenergieanlage gemäß der vorliegenden Erfindung,
- Fig. 2a: eine schematische Detailansicht zu der Windenergieanlage gemäß Fig. 1,
- Fig. 2b: eine weitere Detailansicht der Darstellung gemäß Fig. 2a,
- Fig. 3: eine weitere schematische Detailansicht zu der Windenergieanlage gemäß Fig. 1, und
- Fig. 4: eine alternative Ausgestaltung zu der Ausführungsform gemäß Fig.3.

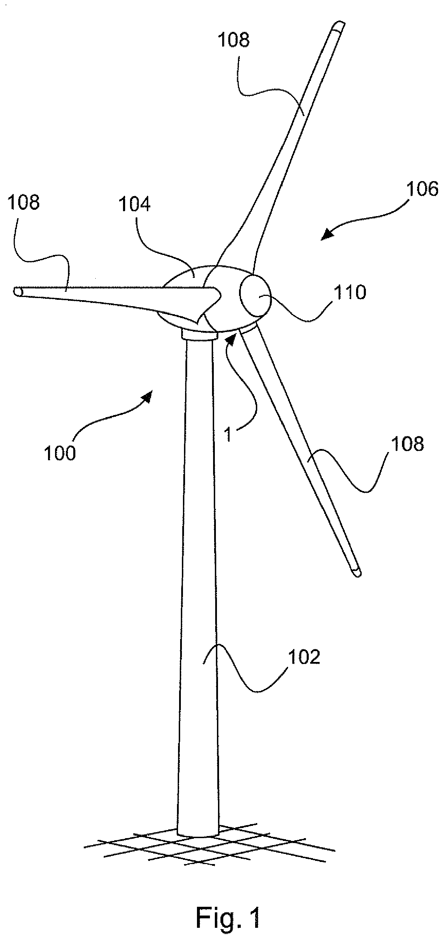

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen Rotor oder Läufer eines Generators, welcher direkt oder indirekt mit dem aerodynamischen Rotor 106 gekoppelt ist. Der Generator ist vorzugsweise ein langsam drehender Synchrongenerator. Der Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden. Zur Lagerung der Rotorblätter 108 relativ zur an der Gondel 104 vorgesehenen Rotornabe ist eine Drehverbindung 1 vorgesehen.

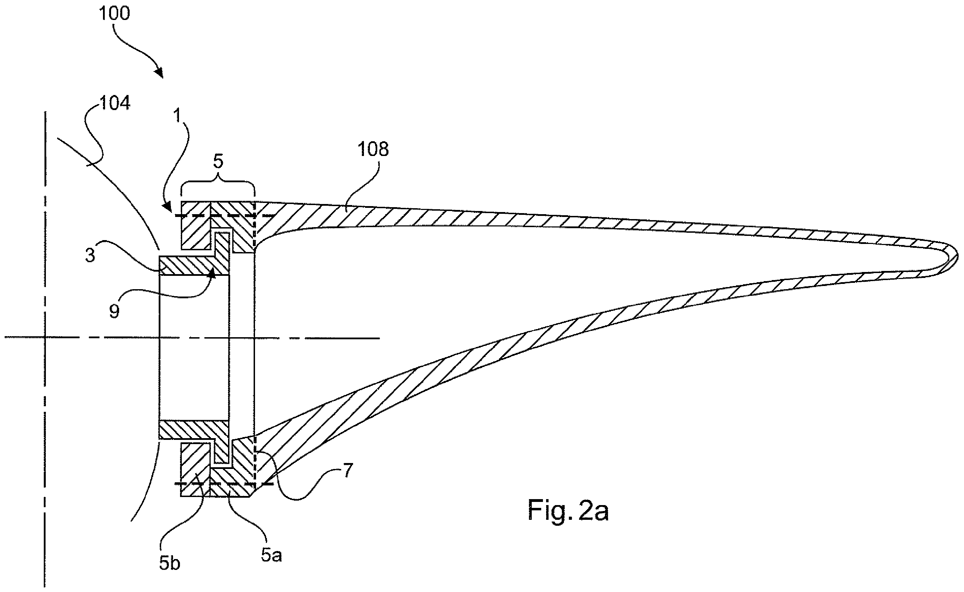

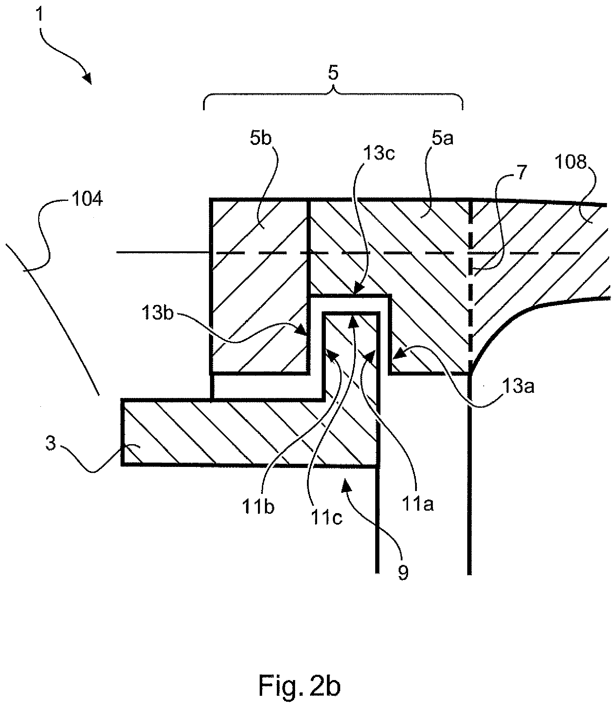

Die Drehverbindung 1 ist mit ihren funktionalen und strukturellen Einzelheiten in den Figuren 2a, b näher gezeigt.

Die Drehverbindung 1 weist einen Innenring 3 auf und einen Außenring 5. Im vorliegenden Ausführungsbeispiel ist der Innenring 3 fest an der Gondel 104 angeordnet, und der Außenring 5 an dem Rotorblatt 108. Optional wird der Außenring 5 als separates Bauteil bereitgestellt und an dem Rotorblatt 108 an einer korrespondierenden Stirnseite befestigt, siehe Trennlinie 7. Gemäß einer anderen, bevorzugten Option wird der Außenring 5 zweiteilig hergestellt. Ein erster Teilkörper 5a des Außenrings 5 wird integral an dem Rotorblatt 108 ausgebildet, besonders bevorzugt bereits während der Herstellung des Rotorblatts 108.

Ein zweiter Teil 5b ist als flanschartige Scheibe, optional segmentartig, ausgebildet und wird lösbar an dem ersten Teilkörper 5a des Außenrings 5 befestigt. Zwischen dem Teilkörper 5a, b des Außenrings 5 ist ein Ringspalt definiert, in dem ein flanschartiger Vorsprung 9 des Innenrings 3 sitzt.

An dem flanschartigen Vorsprung 9 des Innenrings 3 sind eine erste und zweite axiale Gleitfläche 11a, b ausgebildet sowie eine, zwischen den ersten beiden axialen Gleitflächen 11a, b angeordnete dritte Gleitfläche 11c, die eine radiale Gleitfläche ist.

Jeweils gegenüberliegend weist der Außenring 5 eine erste und zweite axiale Gleitfläche 13a, b auf sowie eine radiale Gleitfläche 13c, die jeweils mit der korrespondierenden, gegenüberliegenden Gleitfläche 11a, b, c eine Gleitlagerung ausbilden. Erfindungsgemäß ist die Gleitlagerung der Drehverbindung 1 eine trockenlaufende Lagerung. Hierunter wird insbesondere verstanden, dass kein Schmiermittel, wie beispielsweise Fett oder Öl, im Gleitspalt vorgesehen ist.

Die erfindungsgemäße trockenlaufende Gleitlagerung spielt ihren Vorteil insbesondere bei kleinen Schwenkamplituden und geringen Rotationsgeschwindigkeiten aus. In diesem Bewegungsbereich sind die Trockenlaufeigenschaften und damit einhergehend die Verschleißbeständigkeit der Drehverbindung 1 überraschend gut.

Der Außenring ist vorzugsweise teilweise oder vollständig aus einem Faserverbundwerkstoff, wie beispielsweise glasfaserverstärktem Kunststoff ausgebildet. Als Kunststoff wird ein duroplastisches Epoxidharz besonders bevorzugt. An der Oberfläche der Gleitflächen 13a, b, c und/oder an den Oberflächen der Gleitflächen 11a, b, c, sind vorzugsweise eine oder mehrere Schichten eines haftmindernden Materials aufgebracht, beispielsweise (expandiertes) Polytetrafluorethylen ((e)PTFE). Der Innenring 3 ist vorzugsweise zumindest im Bereich des flanschartigen Vorsprungs 9, vorzugsweise aber vollständig, aus einem metallischen Werkstoff hergestellt. Die Oberflächenrauheit beträgt vorzugsweise weniger als 1,9 µm Rₐ, besonders bevorzugt weniger als 0,8 µm Rₐ.

Das Konzept der erfindungsgemäßen Drehverbindung wurde in den vorliegenden Figuren 2a, b anhand einer Drehverbindung für ein Pitchlager eines Rotorblattes 108 an der Gondel 104 dargestellt. Das Konzept lässt sich aber erfindungsgemäß auch auf eine Drehverbindung in Form eines Azimutlagers zwischen dem Turm 102 und der Gondel 104 realisieren. Auch bei einem solchen (nicht dargestellten) Turm ist vorzugsweise einer der Lagerringe aus einem metallischen Werkstoff ausgebildet, während der jeweils andere Lagerring aus einem ein- oder mehrteiligen Ring bestehend teilweise oder vollständig aus Faserverbundwerkstoff ausgebildet ist. Insoweit wird auf die obige Figurenbeschreibung und die weiter oben beschriebenen bevorzugten Ausführungsformen vollumfänglich Bezug genommen.

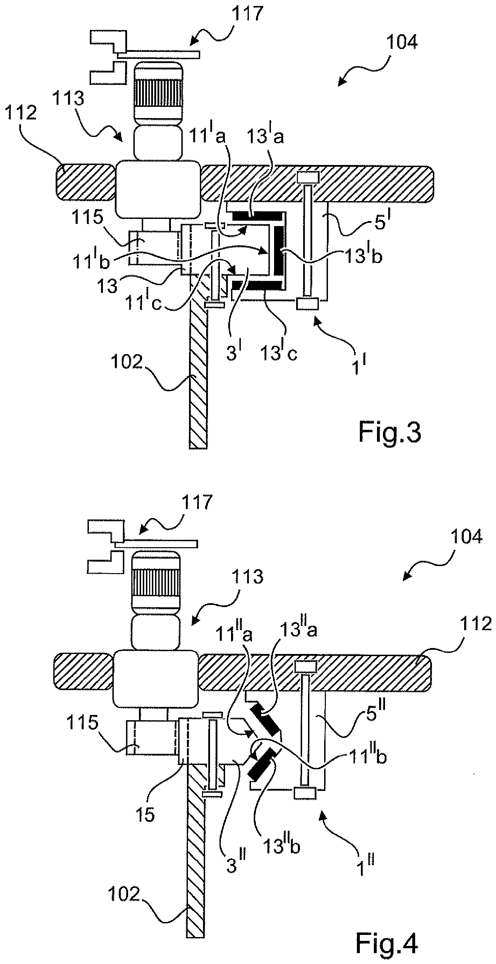

Unter Bezugnahme auf die vorstehenden Figuren 1 und 2a, b wurde die Erfindung primär anhand einer Blattlagerung erörtert. Wie eingangs erwähnt betrifft die Erfindung allerdings auch andere Drehverbindungen wie beispielsweise die in den Figuren 3 und 4 gezeigten Azimutlagerungen. In Figur 3 ist ein Ausschnitt einer Gondel 104 der Windenergieanlage 100 (Figur 1) abgebildet. Die Windenergieanlage 100 weist in der Gondel 104 einen Maschinenträger 112 auf. An dem Maschinenträger 112 ist ein Antriebsmotor 113 zum Verstellen der Winkelausrichtung der Gondel 104 relativ zu dem Turm 102 ausgebildet. Der Antriebsmotor weist ein Antriebsritzel 115 auf, welches mit einer Verzahnung 15 und einer Drehverbindung 1' verzahnt ist. Die Verzahnung 15 ist an einem Lagerring 3', der vorzugsweise ein Innenring ist, ausgebildet. Der erste Lagerring 3' ist vorzugsweise, teilweise oder vollständig aus einem metallischen Werkstoff hergestellt, oder aus einem der bevorzugten oben beschriebenen Werkstoffe. Der erste Lagerring 3' weist drei Gleitflächen 11' a, b, c auf.

Die Drehverbindung 1' weist ferner einen zweiten Lagerring 5' auf. Im Unterschied zu dem Lagerring 5 gemäß den Figuren 2 a, b ist der zweite Lagerring 5' hinsichtlich seiner Grundstruktur aus einem metallischen Werkstoff ausgebildet und weist zwei axiale Gleitflächen 13' a, c und eine radiale Gleitfläche 13' b auf, die vorzugsweise aus einem faserverstärkten Kunststoff bestehen und optional eine oder mehrere Schichten eines haftmindernden Materials aufweisen. Alternativ oder zusätzlich sind auch an den Oberflächenabschnitten der Gleitflächen 11' a, b, c ein oder mehrere Schichten eines haftmindernden Materials gemäß den vorstehend beschriebenen bevorzugten Ausführungsformen aufgebracht. Die Gleitflächen 11' a, b, c und 13' a, b, c bilden jeweils Gleitlager miteinander aus.

In Figur 4 ist eine leicht abweichende alternative Ausgestaltung einer Azimutlagerung als Drehverbindung 1" abgebildet. Die Drehverbindung 1" dient wie bereits die Drehverbindung 1' gemäß Figur 3 zu einer Rotation des Maschinenträgers 112 bzw. der Gondel 104 relativ zu dem Turm 102 der Windenergieanlage 100 (Figur 1). Im Unterschied zu der Ausführungsform gemäß Figur 3 weist ein erster Lagerring 3", der vorzugsweise ein innerer Lagerring ist, nicht drei, sondern lediglich zwei Gleitflächen 11" a, b auf, die nicht streng radial oder axial ausgerichtet sind, sondern jeweils angestellt sind. Je nachdem, ob die abgebildete Konfiguration den ersten Lagerring 3" als Innen- oder Außenring zeigt, wäre die gezeigte Gleitlageranordnung eine X- oder O-Lagerung.

Die in Figur 4 gezeigte Drehverbindung 1" weist zusätzlich zu dem ersten Lagerring 3" einen zweiten Lagerring 5" auf, an dem korrespondierend zu dem ersten Lagerring 3" zwei Gleitflächen 13" a, b angeordnet sind. Vorzugsweise ist der zweite Lagerring 5" aus einem metallischen Werkstoff ausgebildet, während die Gleitflächen 13" a, b in Form von, vorzugsweise segmentierten, Elementen aus einem Faserverbundwerkstoff wie beispielsweise glasfaserverstärktem Kunststoff ausgebildet sind. Zu Oberflächenbeschaffenheit und Beschichtung gilt vorzugsweise dasselbe wie für die vorstehenden Ausführungsbeispiele und bevorzugten Ausführungsformen beschrieben wurde.

In den Figuren 3 und 4 ist in identischer Weise eine Motorbremse 117 dargestellt, die in bekannter Weise dazu eingesetzt wird, eine Rotationsbewegung der Gondel 104 relativ zum Turm 102 zu bremsen oder zu stoppen.

Sowohl das Ausführungsbeispiel der Figur 3 als auch das Ausführungsbeispiel der Figur 4 kann eine relativ zum Turm 102 innenliegende Drehverbindung 1', 1" oder außenliegende Drehverbindung 1', 1" zeigen. Die Terminologie des Innen- bzw. Außenrings ist dann jeweils entsprechend vertauscht.

## Patentansprüche

1. Windenergieanlagen-Rotorblatt (108), welches mittels einer Drehverbindung (1) mit einer Nabe der Windenergieanlage verbindbar ist, wobei
die Drehverbindung (1) als Gleitlagerung ausgebildet ist, mit einem Innenring (3, 3', 3')' mit einer Anzahl erster Gleitflächen (11 a, b, c),
einem Außenring (5, 5', 5')' mit einer Anzahl zweiter Gleitflächen (13 a, b, c), die jeweils einer der ersten Gleitflächen als Gleitpartner zugeordnet sind,
wobei der Innenring und der Außenring jeweils eine radiale Lagerfläche (12 b, 13 b) und zwei axiale Lagerflächen (11 a, 11 c, 13 a, 13 c) aufweisen, und wobei
die Gleitlagerung als eine trockenlaufende Gleitlagerung ausgebildet ist,
**dadurch gekennzeichnet, dass** der Außenring (5) eine, mehrere oder sämtliche der Anzahl von Gleitflächen (13 a c) aus Faserverbundwerkstoff aufweist, und
mindestens zweiteilig ausgebildet ist, indem an einem ersten Teilkörper die radiale Gleitfläche und eine erste axiale Gleitfläche ausgebildet sind, und an mindestens einem zweiten Teilkörper (5b) die zweite axiale Gleitfläche ausgebildet ist, wobei der erste Teilkörper (5a) integral an dem Rotorblatt (108) ausgebildet ist.

2. Rotorblatt nach Anspruch 1,
wobei auf einer, mehreren oder sämtlichen Gleitflächen eine Anzahl von Gleitschichten aus jeweils einem der folgenden Materialien aufgetragen ist:
- Polytetrafluorethylen,
- expandiertes Polytetrafluorethylen,
- Molybdaendisulfid,
- Graphit,
- Graphen,
- aufgedampfter metallischer Werkstoff,
oder einer Kombination aus mehreren dieser Materialien.

3. Rotorblatt nach Anspruch 2,
wobei als Fasermaterial für den Faserverbundwerkstoff ein Material ausgewählt ist aus der Liste bestehend aus:
- Kohlenstofffasern,
- Glasfasern,
- Stahlfasern,
- Bambusfasern,
oder einer Kombination mehrerer dieser Fasern.

4. Rotorblatt nach einem der vorstehenden Ansprüche,
wobei der Faserverbundwerkstoff vorzugsweise in verwobener Form vorliegt, und in ein Matrixmaterial eingebettet ist, wobei das Matrixmaterial vorzugsweise als Thermoplast, oder
Duroplast, insbesondere Epoxidharz ausgebildet ist.

5. Rotorblatt nach einem der vorstehenden Ansprüche,
wobei der die Gleitflächen aus Faserverbundwerkstoff aufweisende Ring (5), vorzugsweise der Außenring, zwei- oder mehrteilig ausgebildet ist, indem an einem ersten Teilkörper (5a) die radiale Gleitfläche und eine erste axiale Gleitfläche ausgebildet sind, und an einem zweiten Teilkörper (5 b) bzw. einem oder mehreren weiteren Teilkörpern die zweite axiale Gleitfläche bzw. eine oder mehrere weitere Gleitflächen ausgebildet ist bzw. sind.

6. Rotorblatt nach Anspruch 5,
wobei der zweite Teilkörper (5 b) als ein- oder mehrteilige Flanschscheibe ausgebildet ist, und wobei der erste und zweite Teilkörper an zueinander korrespondierenden Stirnseiten miteinander koppelbar sind, vorzugsweise reversibel lösbar.

7. Rotorblatt nach einem der vorstehenden Ansprüche,
wobei der Innenring (3')' und der Außenring (5')' jeweils eine oder mehrere miteinander korrespondierende angestellte Lagerflächen (11" a, b; 13" a, b) aufweisen, vorzugsweise in entgegengesetzte Richtungen angestellte Lagerflächen.

8. Windenergieanlage (100), mit
einem Turm (102), auf dem eine Gondel (104) mittels einer ersten Drehverbindung (1', 1") gelagert ist, wobei an der Gondel (104) eine Rotornabe (106) vorgesehen ist, mit einem oder mehreren Rotorblättern (108), die zum Antrieb eines Generators an der Rotornabe (106) befestigt sind, wobei die Rotorblätter (108) in ihrem Anstellwinkel verstellbar sind und mittels einer zweiten Drehverbindung (1) an der Rotornabe (106) gelagert sind, wobei das oder die Rotorblätter (108) nach einem der vorstehenden Ansprüche ausgebildet sind.

## Claims

1. A wind power installation rotor blade (108) which can be connected to a hub of the wind power installation by means of a rotary connection (1), wherein
the rotary connection is in the form of a plain bearing assembly, comprising an inner ring (3, 3', 3") having a number of first plain bearing surfaces (11a, b, c),
an outer ring (5, 5', 5") having a number of second plain bearing surfaces (13a, b, c) which are respectively associated with one of the first plain bearing surfaces as a plain bearing surface partner,
wherein the inner ring and the outer ring each have a radial bearing surface (12b, 13b) and two axial bearing surfaces (11a, 11c, 13a, 13c), and wherein
the plain bearing assembly is in the form of a dry-running plain bearing assembly, **characterized in that** the outer ring (5) has one, more or all of the number of plain bearing surfaces (13a-c) of fibre composite material, and
is of an at least two-part structure insofar as the radial plain bearing surface and a first axial plain bearing surface are provided at a first body portion and the second axial plain bearing surfaces is provided at at least one second body portion (5b), wherein
the first body portion (5a) is provided integrally on the rotor blade (108).

2. A rotor blade according to claim 1
wherein a number of plain bearing layers comprising a respective one of the following materials is applied to one, more or all plain bearing surfaces:
- polytetrafluorethylene,
- expanded polytetrafluorethylene,
- molybdenum disulphide,
- graphite,
- graphene,
- vapour-deposited metallic material,
or a combination of a plurality of those materials.

3. A rotor blade according to claim 2
wherein a material is selected as the fibre material for the fibre composite material from the list consisting of:
- carbon fibres,
- glass fibres,
- steel fibres,
- bamboo fibres,
or a combination of a plurality of said fibres.

4. A rotor blade according to one of the preceding claims
wherein the fibre composite material is preferably in woven form and embedded in a matrix material, wherein the matrix material is preferably in the form of a thermoplastic material or a thermosetting material, in particular epoxy resin.

5. A rotor blade according to one of the preceding claims
wherein the ring (5), preferably the outer ring, having the plain bearing surfaces of fibre composite material, is of a two-part or multi-part structure insofar as the radial plain bearing surface and a first axial plain bearing surface are provided at a first body portion (5a) and the second axial plain bearing surface or one or more further plain bearing surfaces is or are provided at a second body portion (5b) or one or more further body portions.

6. A rotor blade according to claim 5
wherein the second body portion (5b) is in the form of a one-part or multi-part flange disc and wherein the first and second body portions can be coupled together, preferably reversibly releasably, at mutually corresponding ends.

7. A rotor blade according to one of the preceding claims
wherein the inner ring (3") and the outer ring (5") respectively have one or more mutually corresponding angled bearing surfaces (11" a, b; 13" a, b), preferably bearing surfaces angled in opposite directions.

8. A wind power installation (100) comprising
a pylon (102) on which a pod (104) is mounted by means of a first rotary connection (1', 1"), wherein provided at the pod (104) is a rotor hub (106) having one or more rotor blades (108) fixed to the rotor hub (106) to drive a generator, wherein the rotor blades (108) are adjustable in their angle of incidence and are mounted to the rotor hub (106) by means of a second rotary connection (1), wherein the rotor blade or blades (108) are designed according to one of the preceding claims.

## Revendications

1. Pale de rotor d'éolienne (108), laquelle peut être reliée à un moyeu de l'éolienne au moyen d'une liaison par rotation (1), dans laquelle
la liaison par rotation (1) est réalisée en tant que palier lisse, avec une bague intérieure (3, 3', 3") avec un nombre de premières surfaces de glissement (11a, b, c),
une bague extérieure (5, 5', 5") avec un nombre de deuxièmes surfaces de glissement (13a, b, c), qui sont associées respectivement à une des premières surfaces de glissement en tant que partenaires de glissement,
dans laquelle la bague intérieure et la bague extérieure présentent respectivement une surface de palier radiale (12b, 13b) et deux surfaces de palier axiales (11a, 11c, 13a, 13c), et dans laquelle
le palier lisse est réalisé en tant qu'un palier lisse à fonctionnement à sec,
**caractérisée en ce que** la bague extérieure (5) présente une, plusieurs ou la totalité du nombre de surfaces de glissement (13a c) composées d'un matériau composite à base de fibres, et
est réalisée au moins en deux parties **en ce que** la surface de glissement radiale et une première surface de glissement axiale sont réalisées sur un premier corps partiel et la deuxième surface de glissement axiale est réalisée sur au moins un deuxième corps partiel (5b), dans laquelle
le premier corps partiel (5a) est réalisé de manière intégrale sur la pale de rotor (108).

2. Pale de rotor selon la revendication 1,
dans laquelle est appliquée sur une, plusieurs ou la totalité des surfaces de glissement un nombre de couches de glissement composées respectivement d'un des matériaux suivants :
- de polytétrafluoroéthylène,
- de polytétrafluoroéthylène expansé,
- de disulfure de molybdène,
- de graphite,
- de graphène,
- d'un matériau métallique appliqué par évaporation,
ou d'une combinaison de plusieurs desdits matériaux.

3. Pale de rotor selon la revendication 2,
dans laquelle est choisi en tant que matériau à base de fibres pour le matériau composite à base de fibres un matériau choisi parmi la liste constituée de :
- fibres de carbone,
- fibres de verre,
- fibres d'acier,
- fibres de bambou,
ou d'une combinaison de plusieurs desdites fibres.

4. Pale de rotor selon l'une quelconque des revendications précédentes,
dans laquelle le matériau composite à base de fibres est présent de préférence sous une forme tressée et est incorporé dans un matériau de matrice, dans laquelle le matériau de matrice est réalisé de préférence en tant que matière thermoplastique, ou
matière thermodurcissable, en particulier résine époxy.

5. Pale de rotor selon l'une quelconque des revendications précédentes,
dans laquelle la bague (5) présentant les surfaces de glissement composées de matériau composite à base de fibres, de préférence la bague extérieure, est réalisée en deux ou en plusieurs parties, en ce que la surface de glissement radiale et une première surface de glissement axiale sont réalisées sur un premier corps partiel (5a), et la deuxième surface de glissement axiale ou une ou plusieurs autres surfaces de glissement est ou sont réalisées sur un deuxième corps partiel (5b) ou un ou plusieurs autres corps partiels.

6. Pale de rotor selon la revendication 5,
dans laquelle le deuxième corps partiel (5b) est réalisé en tant disque à bride en une ou en plusieurs parties, et dans laquelle le premier et le deuxième corps partiel peuvent être couplés l'un à l'autre sur des côtés frontaux correspondants l'un à l'autre de préférence de manière amovible et réversible.

7. Pale de rotor selon l'une quelconque des revendications précédentes,
dans laquelle la bague intérieure (3") et la bague extérieure (5") présentent respectivement une ou plusieurs surfaces de palier (11"a, b ; 13"a, b) placées correspondant les unes aux autres, de préférence des surfaces de palier placées dans des directions opposées.

8. Eolienne (100) avec
une tour (102), sur laquelle une nacelle (104) est montée au moyen d'une première liaison par rotation (1', 1"), dans laquelle est prévu sur la nacelle (104) un moyeu de pale (106), avec une ou plusieurs pales de rotor (108), qui sont fixées sur le moyeu de rotor (106) pour l'entraînement d'un générateur, dans laquelle les pales de rotor (108) peuvent être ajustées selon leur angle d'incidence et sont montées sur le moyeu de rotor (106) au moyen d'une deuxième liaison par rotation (1), dans laquelle la ou les pales de rotor (108) sont réalisées selon l'une quelconque des revendications précédentes.
